Europäisches Patentamt

European Patent Office

Office européen des brevets

(19)

(11) Numéro de publication: **0 130 891**
**B1**

(12) **FASCICULE DE BREVET EUROPEEN**

(45) Date de publication du fascicule du brevet: **03.05.89**

(21) Numéro de dépôt: **84401306.0**

(22) Date de dépôt: **22.06.84**

(51) Int. Cl.⁴: **C 08 J 3/02,** C 08 L 5/00,
E 21 B 43/22

(54) Compositions de biopolymères et leur procédé de préparation.

(30) Priorité: **04.07.83 FR 8311060**

(43) Date de publication de la demande:
**09.01.85 Bulletin 85/02**

(45) Mention de la délivrance du brevet:
**03.05.89 Bulletin 89/18**

(84) Etats contractants désignés:
**AT DE FR GB SE**

(56) Documents cités:
GB-A-1 562 530
GB-A-2 064 569
GB-A-2 079 768

PATENTS ABSTRACTS OF JAPAN, vol. 7, no.
135(C-170)(1280), 11 juin 1983, page 38C170; &
JP - A - 58 47463 (RAION K.K.) 19-03-1983

(73) Titulaire: **RHONE-POULENC CHIMIE**
**25, quai Paul Doumer**
**F-92408 Courbevoie Cédex (FR)**

(72) Inventeur: **Peignier, Michel**
**88, rue Yves Lecoz**
**F-78000 Versailles (FR)**
Inventeur: **Garcia, Michel**
**4, rue Galipeau**
**F-92160 Antony (FR)**
Inventeur: **Senechal, Alain**
**1-3 rue Paul Bert**
**F-94700 Maisons-Alfort (FR)**
Inventeur: **Gagne, Pierre**
**23 bis, Chemin du Grand Bois**
**F-69160 Tassin La Demi-Lune (FR)**
Inventeur: **Lespinasse, Dominique**
**au Baty Frans**
**F-01480 Jassans Riottier (FR)**
Inventeur: **Chaux, Jean-Bernard**
**31, Chemin du Grand Bois**
**F-69160 Tassin La Demi-Lune (FR)**

(74) Mandataire: **Cazes, Jean-Marie et al**
**RHONE-POULENC INTERSERVICES Service**
**Brevets Chimie 25, quai Paul Doumer**
**F-92408 Courbevoie Cédex (FR)**

Courier Press, Leamington Spa, England.

**Description**

La présente invention a pour objet des compositions à base de biopolymères, Puis spécifiquement, l'invention a pour objet des émulsions stables huile dans eau à concentration élevée en biopolymères, leurs procédés de préparation et leurs applications.

On désigne par biopolymères ou biogommes les hétéropolysaccharides d'origine microbienne obtenus par fermentation d'un hydrate de carbone assimilable par un microorganisme approprié. L'exemple le plus représentatif de ces biopolymères est la gomme xanthane. En raison de leurs propriétés épaississantes et de leur rhéologie, les hétéropolysaccharides ont trouvé des applications variées notamment dans le domaine alimentaire et dans les industries du bâtiment, de la peinture, du papier, du textile, des cosmétiques, des phytosanitaires, dans le traitement des eaux et dans l'industrie pétrolière par exemple pour le forage et la récupération assistée du pétrole.

Pour de nombreuses applications, il est nécessaire de mettre le biopolymère sous forme d'une solution aqueuse faiblement concentrée. Il est connu que l'inconvénient, majeur des poudres de biogommes est leur difficulté à se dissoudre rapidement sans moyen d'agitation à effet de cisaillement élevé, ce cisaillement pouvant provoquer une dégradation de certaines propriétés. Pour des applications de nécessitant pas l'emploi d'un biopolymère de haute pureté, il serait possible d'utiliser directement le moût de fermentation mais le coût du transport est un obstacle au développement commercial de ces produits.

Afin d'accroître la dispersibilité de la gomme xanthane et de faciliter sa mise en oeuvre, on a déjà proposé des compositions à concentration élevée en polymère. Ainsi EP—A—016640 décrit des "slurries" de gomme xanthane dans un solvant hydrophobe contenant un agent de suspension. GB—A—2 079 768 décrit des suspensions anhydres comprenant 30—60% de particules de polymère hydrosoluble dispersées dans un hydrocarbure liquide, un savon d'acide gras comme épaississant ainsi que, éventuellement, un agent tensio-actif pour faciliter la dispersion ultérieure de la suspension dans un milieu aqueux. Quand les suspensions concentrées sont utilisées, elles sont dispersées dans l'eau sous agitation jusqu'à ce que le polymère soit hydraté, pour fournir des solutions viscosifiées contenant le polymère en quantités généralement comprises entre 0,005 et 1%.

Le but essentiel de la présente invention est de fournir des compositions à concentration relativement élevée en biopolymère qui soient pompables, stables au stockage et qui permettent une mise en solution rapide sur un site industriel. Un autre but que vise l'invention est de permettre de disposer d'une composition à concentration élevée en biopolymère sans qu'il soit nécessaire de passer par le stade intermédiaire d'obtention de la poudre à partir du moût de fermentation. L'invention a encore pour but de fournir des compositions qui, par dilution dans un milieu aqueux, donnent des solutions non colmatantes pouvant être utilisées notamment pour la récupération assistée du pétrole.

Les compositions de biopolymères selon l'invention contiennent au moins 8% de biopolymère exprimé en poids de matière sèche par rapport au poids total de l'émulsion.

Elles sont caractérisées en ce qu'elles sont sous forme d'une émulsion stable huile-dans-eau comprenant en poids:

a) 40 à 99 parties d'une phase aqueuse contenant en poids de 10 à 60% de biopolymère et de 40 à 90% d'eau.

b) 1 à 60 parties d'une huile. et

c) 1 à 40% par rapport au mélange a)+b) d'au moins un agent tensio-actif.

De préférence, les émulsions contiennent le biopolymère en quantité pondérale supérieure à 15%.

L'eau de la phase aqueuse peut être de l'eau pure, de l'eau désionisée ou de l'eau de ville contenant des ions minéraux en proportions variables.

Comme mentionné précédemment, le biopolymère est un hétéropolysaccharide de poids moléculaire élevé obtenu par fermentation d'un hydrate de carbone sous l'action de microorganismes. De nombreuses espèces de microorganismes peuvent produire des gommes hydrophiles. De manière générale, tout hétéropolysaccharide ayant des propriétés hydrophiles, pseudoplastiques et viscosifiantes et qui est produit par fermentation peut être utilisé dans les émulsions de la présente invention. Comme microorganismes, on peut citer en particulier, les bactéries du genre Xanthomonas, Arthrobacter ou Azotobacter. L'expérience a montré que certaines, espèces sont capables de produire les polymères avec une efficacité particulière.

Les espèces Xanthomonas Begoniae, Xanthomonas Campestris, Xanthomonas Incanae et Xanthomonas Pisi sont particulièrement remarquables à cet effet pour la synthèse des hétéropolysaccharides.

La gomme xanthane est le biopolymère produit par l'espèce Xanthomonas Campestris. Sa masse moléculaire est supérieure à $10^6$. Elle contient à l'état natif des unités D-glucose, D-mannose, D-glucuronate, les radicaux O-acétyle et des radicaux pyruvate. La préparation de la gomme xanthane est décrite dans de nombreuses publications et de nombreux brevets par exemple les brevets US—A—3020206, US—A—3391060, US—A—4154654.

A l'issue du processus de fermentation et de production du polysaccharide, le moût de fermentation contient environ 15 à 30 g/litre de biopolymère. Il peut être avantageux de soumettre le moût fermenté à un traitement thermique, par exemple dans un domaine de température allant de 80 à 130°C pendant environ 10 minutes à environ 1 heure (US—A—3591578). Le biopolymère peut être récupéré du moût par précipitation à l'aide d'un agent de précipitation, généralement l'isopropanol, filtration et séchage. On peut éventuellement soumettre le moût, ou une solution de biopolymère reconstituée à partir de la poudre, à des opérations de purification telles que centrifugation, filtration sur terres de diatomées, action des enzymes, on toute autre méthode connue dans l'art antérieur. Les émulsions selon l'invention et leurs procédés de préparation s'appliquent aussi bien aux polysaccharides à l'état natif qu'aux polysaccharides désacétylés (cf. US—A—3054689), dépyruvatisés (cf. US—A—4340678) modifiés par chauffage en milieu alcalin (cf. US—A—3964972) ou par toute autre méthode connue.

La phase huileuse est constituée d'un liquide hydrophobe, non miscible on peu miscible à l'eau (solubilité égale ou inférieure à 1% à 20°C). A titre non limitatif, on peut employer comme phase huileuse des hydrocarbures aliphatiques ayant de préférence au moins 8 atomes de carbone, des hydrocarbures aromatiques, des esters d'alcools lourds à partir de $C_6$. Les hydrocarbures sont généralement disponibles sous forme de mélanges complexes tels que les coupes d'hydrocarbures aliphatiques desaromatisés, les mélanges d'isoparaffines, le kérosène, les coupes de distillation du pétrole. Les huiles végétales telles que l'huile de maïs, l'huile d'arachide, l'huile de soja peuvent encore être utilisées avantageusement pour certaines applications.

La dispersion et la stabilisation de la phase huileuse dans la phase aqueuse sont obtenues à l'aide d'un agent tensio-actif dont la valeur HLB est choisie en fonction de l'huile utilisée et de l'application visée. Par agent tensio-actif, on désigne tout composé dont la structure chimique comprend une extrêmité hydrophile et une extrêmité lipophile. L'agent tensio-actif peut être non-ionique, anionique, cationique ou amphotère mais de préférence, il est non ionique ou anionique.

Pour le choix de l'agent tensio-actif, on peut se reporter, entre autres, à l'Encyclopedia of Chemical Technology—Kirk Othmer Vol. 19 ou aux ouvrages de la Série Surfactant, séries édités par Marcel DREKKER: Non-Ionic Surfactants Vol. I, Schick—Cationic Surfactants, Vol. IV, Jungerman—Anionic Surfactants Vol. VII, Linfield.

Comme agent tensio-actif anionique, on peut utiliser par exemple des sels alcalins d'acides carboxyliques, des sulfonates tels que les alcoyl- et/ou aryl-sulfonates, les sulfosuccinates, des sulfates et produits sulfatés comme les alkylsulfates, les alcools sulfatés, les éthers polyglycoliques sulfatés, des dérivés phosphatés comme les alcools éthoxylés phosphatés.

Parmi les agents tensio-actifs cationiques, on peut utiliser par exemple des mon-, di- et polyamines éthoxylées, des amidesamines éthoxylés, des sels d'ammonium quaternaire éthoxylés.

Comme agent tensio-actif non ionique, on peut faire appel de manière générale à des composés obtenus par condensation d'oxyde d'alcoylène avec un composé organique aliphatique ou alcoyl-aromatique. Des agents tensio-actifs appropriés sont les alcoylphénols polyoxyéthylénés, les alcools polyoxyéthylénés, les acides gras polyoxyéthylénés, les triglycérides polyoxyéthyléns, les dérivés polyoxyéthylénés et polyoxypropylénés. Parmi cette classe de tensio-actif, on donne la préférence aux produits de condensation du nonylphénol et de l'oxyde d'éthylène comportant en moyenne 4 à 16 moles d'oxyde d'éthylène, et aux produits de condensation des alcools aliphatiques ayant de 8 à 18 atomes de carbone avec l'oxyde d'éthylène comportant en moyenne 2 à 16 moles d'oxyde d'éthylène.

Tous ces agents tensio-actifs peuvent être utilisés sels ou en mélange entre eux. On peut introduire tout ou partie du tensio-actif, selon la nature, dans l'huile ou dans l'eau.

Des émulsions stables peuvent être obtenues par la mise en oeuvre des différents constituants dans les rapports pondéraux précédemment définis en choisissant convenablement le ou les tensio-actif(s) en fonction de l'huile utilisée. La quantité d'agent tensio-actif nécessaire peut être facilement déterminée par expérimentation de routine. La demanderesse a trouvé des émulsions particulièrement intéressantes qui contiennent 20 à 30 parties de biopolymère, 30 à 50 parties d'eau, 25 à 40 parties d'huile et 4 à 10 parties de tensio-actifs.

La préparation des émulsions selon l'invention peut se faire soit à partir de la poudre de biopolymère, soit à partir d'une solution aqueuse contenant généralement 1 à environ 15—18% de biopolymère. Il est à noter que ces concentrations ne sont pas limitatives de l'invention.

Selon un premier mode de réalisation, l'émulsion est préparée à partir de la poudre. On peut alors constituer initialement une émulsion huile dans eau en introduisant sous agitation l'eau dans l'huile contenant le ou les tensio-actifs, puis ajouter lentement le biopolymère tout en maintenant l'agitation. Alternativement, il est possible de mélange le tensio-actif dans l'huile, puis de disperser la poudre de polymère au sein d'huile sous agitation suffisante et enfin d'ajouter l'eau de manière continue en maintenant une forte agitation.

Selon un second mode de réalisation, l'émulsion est préparée à partir d'une solution aqueuse diluée de biopolymère. Le procédé de préparation est alors caractérisé en ce que:

a) on prépare une émulsion huile dans eau par addition d'une huile et d'un agent tensio-actif à une solution aqueuse contenant 1 à environ 18% en poids de biopolymère dans un rapport Huile/Eau compris entre environ 1/100 et 2/1.

b) on concentre l'émulsion par élimination d'eau selon tout moyen connu jusqu'à obtention d'une émulsion contenant 10 à 60% de polymère dans la phase aqueuse.

L'élimination de l'eau peut se faire par exemple par évaporation ou distillation, éventuellement sous pression partielle. Il est possible d'éliminer une partie de la phase huileuse, en mélange azéotropique ou non avec l'eau. On peut encore opérer par ultrafiltration en utilisant des membranes hydrophiles classiques.

Dans un aspect particulièrement avantageux de réalisation du procédé, l'émulsion est préparée à partir d'un moût de fermentation. Il est possible dans ce cas de mettre en oeuvre un moût brut, on moût clarifié ou un moût préconcentré.

La préconcentration du moût brut ou clarifié peut être effectuée par tout moyen conventionnel par exemple évaporation ou ultrafiltration, cette dernière méthode étant préférée à l'échelle industrielle car elle permet, de manière connue, de séparer les molécules de bas poids moléculaire des molécules de haut poids moléculaire et de concentrer les polymères sans perte de leurs propriétés rhéologiques. Après ou avant concentration le moût peut être débarrassé de ses impuretés par filtration et/ou traitement enzymatique. Le moût brut contient généralement 15 à 30 g/litre de biopolymère. Par ultrafiltration, la concentration du moût peut être élevée jusqu'à environ 150—180 g/litre.

Selon un mode de mise en oeuvre intéressant, l'émulsion est réalisée à partir d'un moût brut de fermentation et elle est ultérieurement concentrée par ultrafiltration en utilisant des techniques et équipements conventionnels à condition évidemment de choisir une membrane poreuse hydrophile dont les pores sont suffisamment petits pour prévenir le passage du biopolymère à travers la membrane.

L'ultrafiltration donne l'assurance de conserver les émulsions en phase continue aqueuse. La concentration par ultrafiltration a encore pour avantage de maintenir les teneurs en sels minéraux de la phase aqueuse à des valeurs voisines de celles présentes dans le moût d'origine, quelle que soit la teneur en polymère.

En variante, on peut concentrer l'émulsion d'abord par ultrafiltration, et ensuite par une autre opération, par exemple évaporation ou distillation.

Sans se départir de l'étendue de l'invention, les émulsions peuvent évidemment contenir en outre des bactéricides, des enzymes ou tout autre additif destiné à une utilisation particulière à condition que cet additif ne nuise pas à la stabilité de l'émulsion.

Les émulsions huile dans eau selon l'invention sont utiles dans toutes les applications requérant des fluides aqueux viscosifiés. Elles ont pour avantage de pouvoir être mises en oeuvre directement pour la préparation de solutions aqueuses diluées sans qu'il soit nécessaire de passer par une phase d'inversion. Elles se dispersent très bien dans l'eau, leur vitesse de dissolution étant au moins égale à celle du moût d'origine. Elles restent pompables et stables dans un intervalle de concentration très large. Leur viscosité est substantiellement inférieure à celle d'une solution aqueuse contenant une quantité équivalente de biopolymère de sorte qu'il est possible d'avoir des émulsions coulables ou pompables avec des concentrations élevées en polysaccharides dans la phase aqueuse. Après dilution, les caractéristiques rhéologiques des solutions aqueuses faiblement concentrées sont au moins égales à celles du moût de départ.

Du fait de tous ces avantages, les émulsions de l'invention sont particulièrement appropriées pour être mises en oeuvre sur un champ pétrolifère et pour préparer des solutions aqueuses destinées à la récupération assistée du pétrole.

Exemple 1

On charge dans un réacteur équipé d'un système d'agitation tournant à 1.000 tours/min 395 g de SOLVESSO 200 (mélange d'hydrocarbures aromatiques commercialisé par la Société Esso Chimie) puis 20 g de tristyrylphénoloxyéthyléné, 20 g de dodécylbenzène sulfonate de calcium et 15 g de phosphate d'alkylarylphénoloxyéthyléné (marques commerciales SOPROPHOR®S 25, SOPROPHOR 70, SOPROPHOR 3 D 33 de la Société Rhône-Poulenc).

Après dissolution du système émulsifiant, on ajoute 250 g de gomme Xanthane en poudre (Marque RHODOPOL® 23 commercialisée par la Société Rhône-Poulenc).

| Dimension des particules | <200 µm | 77,5% |
|---|---|---|
| | entre 200—250 µm | 14% |
| | >250 µm | 8,5% |

La poudre étant bien dispersée au sein du solvant, on introduit en continu pendant 15 min 300 g d'eau tout en maintenant l'agitation.

On obtient une émulsion Huile dans eau très homogène qui ne présente aucune séparation de phases après 20 jours de repos à température ambiante.

A partir de cette émulsion, on prépare une solution aqueuse à 0,3% de gomme xanthane. On mesure la viscosité du sol obtenu et on la compare avec un sol de même concentration (Témoin) préparé à partir de la poudre de Rhodopol.

Les conditions de préparation des sols sont les suivantes pour chaque essai, on confectionne 400 g de sol,

—dans un becher équipé d'un système d'agitation tournant à la vitesse de 500 tours/min, on introduit 400 g d'eau de ville.

—on verse rapidement la composition ou la poudre en quantité voulue, la durée d'addition étant inférieure à 30 secondes.

4

—on poursuit l'agitation 1 mn après la fin de l'introduction.

Les mesures de viscosité sont faites à 23°C à l'aide d'un viscosimètre BROOKFIELD, modèle RTV, plongeur n° 2, à la vitesse de 10 tours/min.

Les mesures sont effectuées après 10, 30, 60 minutes puis après 24 heures de repos.

| Durée de l'agitation | Viscosité en mPa · s | |
| --- | --- | --- |
| | Ex. 1 | Témoin |
| 10 minutes | 220 | 110 |
| 30 minutes | 540 | 320 |
| 60 minutes | 740 | 560 |
| 24 heures | 860 | 740 |

Exemple 2

On utilise les mêmes composants, dans les mêmes, quantités que selon l'exemple précédent, mais on opère de la manière suivante:

On additionne les émulsifiants dans le SOLVESSO. Après dissolution, on ajoute lentement l'eau sous agitation, puis la poudre de gomme xanthane.

On obtient une émulsion stable, aucine séparation de phases n'est observable après 20 jours de repos.

Exemple 3

Dans un réacteur équipé d'une agitation et d'un bain thermostaté, on introduit 500 g d'un moût brut de fermentation concentré par ultrafiltration jusqu'à une teneur de 7,6% de gomme xanthane.

On introduit sous agitation (500 tours/min) 74,5 g d'un mélange contenant:

| | |
| --- | --- |
| SOLVESSO 200 | 67 g |
| SOPROPHOR 70 | 2,75 g |
| SOPROPHOR S 25 | 2,75 g |
| SOPROPHOR 3 D 33 | 2 g |

On maintient l'agitation 10 minutes puis on met le réacteur sous vide partiel (20.000—21.330 Pa) et l'on élève la température à 80—85°C. La phase d'évaporation dure 3 heures.

On obtient une émulsion en phase continue aqueuse dont la composition pondérale est la suivante:

| | |
| --- | --- |
| Gomme xanthane | 23% |
| Eau | 44% |
| Huile | 28,5% |
| Tensio-actifs | 4,5% |

Cette émulsion est homogène et coulable. On n'observe aucune séparation de phases après 1 mois de stockage à température ambiante. On mesure l'évolution de sa viscosité en fonction de différents gradients de vitesse comparativement d'une part à un sol à 2% de gomme xanthane (Rhodopol 23) préparé par dissolution de la poudre dans de l'eau de ville et d'autre part au moût de départ. Les résultats sont donnés dans le Tableau I.

On teste au Rheomat la rhéologie des solutions à différentes concentrations préparées à partir de l'émulsion et on la compare à des solutions de même concentration préparées à partir du moût de départ.

Pour chaque concentration, un rhéogramme tracé 24 heures après la fin de la préparation permet:

—de calculer la contrainte critique au seuil d'écoulement

—de calculer les viscosités apparentes à divers gradients de vitesse

—d'évaluer la pseudoplasticité.

Les résultats sont donnés dans le tableau II. Les mêmes mesures effectuées après 10 jours de stockage à 23°C donnent des résultats identiques.

Comparativement au moût de départ, on note une amélioration des performances de l'émulsion au regard du seul d'écoulement et de la viscosité, quelle que soit la concentration des solutions. Dans tous les cas, la pseudoplasticité croît lorsque la concentration des sols augmente.

L'examen comparé des solutions préparées en eau de ville et en eau salée fait apparaître un effet favorable sur le seuil d'écoulement et la viscosité par emploi d'eau salée, le comportement pseudo-plastique restant identique.

Exemple 4

En opérant de la même manière qu'à l'exemple 3, on prépare une émulsion H/E à partir de:

—500 g de moût de gomme xanthane à 7,8% de matière sèche.

—60 g de SOLVESSO 200.

—7,5 g de CEMULSOL® LA 20 (Alcool laurique éthoxylé. Marque commerciale de la Société SFOS).

—7,5 g de CEMULSOL NP 14 (nonylphénol polyéthoxyle. Marque de la Société SFOS).

Après évaporation/concentration, on obtient une émulsion dont la composition pondérale est la suivante:

| | |
|---|---|
| Gomme xanthane | 22,3% |
| Eau | 40,5% |
| Huile | 28,6% |
| Tensio-actifs | 8,6% |

Exemple 5

Une émulsion est préparée de la manière indiquée à l'exemple 3 en utilisant:

—pour la phase aqueuse 87 g d'un moût de fermentation à 7,8% en poids de gomme xanthane

—pour la phase huileuse:

| | |
|---|---|
| 11 g de EXSOL D 100 | hydrocarbures aliphatiques désaromatisés Société ESSO Chimie—d=0,805 |
| 1 g de CEMULSOL LA 20 | |
| 1 g de CEMULSOL PA 17 | alkylpolyétherphosphate Société SFOS |

Après concentration par évaporation (70°C—sous 20.000—21.500 Pa) l'émulsion finale présente la composition suivante:

| | |
|---|---|
| Gomme xanthane | 25,2% |
| Eau | 29,0% |
| Huile | 38,1% |
| Emulsionnants | 7,7% |

On détermine la rhéologie et la filtrabilité des solutions aqueuses diluées préparées d'une part à l'aide de cette émulsion, d'autre part à l'aide du moût ayant servi à préparer l'émulsion (témoin).

Rhéologie

L'émulsion (ou le moût) est diluée dans de l'eau saline (50 g/l NaCl et 5 g/l CaCl$_2$) de manière à obtenir une solution contenant 1 000 ppm de gomme xanthane.

On mesure la viscosité apparente à différentes vitesses de cisaillement.

Test d'écoulement ou de filtrabilité à débit constant

Cet test permet de mettre en évidence le phénomène de colmatage pouvant se produire lors de l'injection d'une solution diluée de biopolymère dans un gisement pétrolier, et donc de mesurer l'aptitude de la solution de biopolymère à être utilisée en récupération assistée du pétrole.

Le principe de cet test consiste à faire circuler les solutions diluées, à débit constant à travers un filtre calibré. La perte de charge (ΔP) engendrée aux bornes du filtre par le passage de la solution de biopolymère caractérise l'aptitude à la filtration.

Pour respecter les conditions d'utilisation sur champ, les solutions sont testées à viscosité identique (et non à concentration égale).

Les tests sont effectués dans les conditions suivantes:

—Température: 30°C.

—Débit: 22,5 ml/heure.

—Filtres Millipore de 47 mm de diamètre, diamètre des pores 8 µm et 12 µm.

—Préparation des solutions. Le moût est dilué dans de l'eau saline (50 g/l NaCl et 5 g/l CaCl$_2$) de manière que la solution résultante ait une viscosite de 35 mPa · s (mesurée au viscosimètre BROOKFIELD, adaptateur UL à 30°C, taux de cisaillement 7,3 s$^{-1}$).

—la perte de charge ΔP est mesurée lorsque 350 ml de solution ont filtré. Si la pression excède 50 millibars, le nombre entre parenthèses indique le volume de la solution qui a filtré lorsque la pression atteint 50 mbar.

Test d'injection à pression constante

Cet test permet de mettre en évidence les propriétés d'injectabilité des solutions diluées de biopolymère. Le principe consiste à faire circuler les solutions, sous pression constante, à travers un filtre calibré. Le volume écoulé en fonction du temps caractérise l'injectabilité.

On opère dans les conditions suivantes:
—Filtres Millipore 47 mm de diamètre, diamètre des pores de 5 µm à 12 µm.
—Pression 3 bars.
—Préparation des solutions: identique au test de filtrabilité à débit constant Viscosité 35 mPa · s (Brookfield—Adaptateur UL 30°C—7,3 s⁻¹).
—On note le temps écoulé pour le passage de 1.000 ml de solution. Si le temps excède 10 minutes, la valeur entre parenthèses indique le volume de la solution qui a filtré.
Les résultats figurent dans le Tableau III.

Exemple 6

A 1 700 g de moût contenant 15 g/kg de gomme xanthane, on ajoute sous agitation un mélange constitué de 38,1 g d'hydrocarbure aliphatique (EXSOL D 100) et 7,7 g d'émulsionnant (CEMULSOL LA 20—CEMULSOL PA 17 Rapport 50/50).

L'émulsion est concentrée par ultrafiltration à l'aide d'un module d'ultrafiltration UFP2 équipé d'une membrane IRIS 3038 (commercialisés par la Société PROLABO).

Pression initiale 5 bars à l'entrée

|  |  |
|---|---|
|  | 3 bars à la sortie |
| Pression finale | 7 bars à l'entrée |
|  | 3 bars à la sortie |

On arrête l'ultrafiltration quand la concentration en gomme xanthane atteint 12% en poids/poids de l'émulsion.

On mesure la viscosité apparente en fonction du gradient de cisaillement. Pour comparison, le moût initial est concentré par ultrafiltration jusqu'à atteindre la même valeur (12%). Les résultats figurent dans le tableau IV.

TABLEAU I

|  | Viscosité en Pa · s. | | |
|---|---|---|---|
|  | 0,1 S⁻¹ | 1 S⁻¹ | 100 S⁻¹ |
| Emulsion à 23% GX selon l'invention | 1350 | 280 | 19 |
| Moût à 7,6% G.X. | 3400 | 510 | 12 |
| Sol à 2% G.X. | 1500 | 200 | 4 |

7

## EP 0 130 891 B1

### TABLEAU II

| | G.X. en solution % | Contrainte au seuil en mPa. | Viscosité en mPa · s en gradient de vitesse de | | |
|---|---|---|---|---|---|
| | | | 1 S⁻¹ | 10 S⁻¹ | 100 S⁻¹ |
| Exemple 3 | 0,1 | 60 | 140 | 39 | 11 |
| eau de ville | 0,3 | 950 | 1900 | 325 | 55 |
| | 0,5 | 4285 | 6600 | 920 | 125 |
| | 1 | 13800 | 18000 | 2300 | 290 |
| Moût de départ | 0,1 | 30 | 98 | 31 | 10 |
| | 0,3 | 860 | 1640 | 290 | 52 |
| eau de ville | 0,5 | 3215 | 5250 | 760 | 110 |
| | 1 | 12020 | 16000 | 2100 | 260 |
| Exemple 3 | 0,1 | 78 | 175 | 46 | 12 |
| eau salée | 0,3 | 1475 | 2800 | 440 | 72 |
| NaCl 20 g/l | 0,5 | 3930 | 6600 | 950 | 135 |
| | 1 | 14755 | 21500 | 2750 | 350 |



### TABLEAU III

| | Rheologie Viscosité en mPa · s* | | | Filtrabilité à débit constant Δp en mbar | | Injectabilité sous 3 bars Temps | | |
|---|---|---|---|---|---|---|---|---|
| | 3,7 s⁻¹ | 7,3 s⁻¹ | 14,7 s⁻¹ | 8 µm | 12 µm | 5 µm | 8 µm | 12 µm |
| Emulsion | 72,0 | 52,0 | 36,5 | 50 (175 ml) | 7,5 | 1'45'' | 1'23'' | 11'' |
| Moût (témoin) | 76,0 | 55,7 | 39,2 | 50 (88 ml) | 5,4 | 10' (360 ml) | 3'25'' | 13'' |

*Viscosimètre Brookfield—adaptateur UL—30°C.

### TABLEAU IV

| | Viscosité en Pa · s* | | | |
|---|---|---|---|---|
| | 0,1 s⁻¹ | 1 s⁻¹ | 10 s⁻¹ | 100 s⁻¹ |
| Emulsion à 12% | 4 800 | 1 000 | 210 | 46 |
| Moût à 12% (témoin) | 13 000 | 1 800 | 290 | 46 |

*Rhéomat 30—Système MSD.

# EP 0 130 891 B1

**Revendications**

1. Compositions à base de biopolymères contenant au moins 8% de biopolymère caractérisées en ce qu'elles sont sous forme d'une émulsion stable huile-dans-eau comprenant en poids:
   a) 40 à 99 parties d'une phase aqueuse contenant en poids 10 à 60% de biopolymère et 40 à 90% d'eau,
   b) 1 à 60 parties d'huile, et
   c) 1 à 40% par rapport au mélange a)+b) d'au moins un agent tensio-actif.

2. Compositions sous forme d'émulsions huile dans eau selon la revendication 1 caractérisées en ce qu'elles comprennent en poids 20 à 30 parties de biopolymère, 30 à 50 parties d'eau, 25 à 40 parties d'huile et 4 à 10 parties d'au moins un agent tensio-actif.

3. Compositions selon l'une des revendications 1 à 2 caractérisée en ce que le biopolymère est la Gomme Xanthane.

4. Compositions selon l'une des revendications 1 à 3 caractérisées en ce que l'huile est un hydrocarbure aliphatique.

5. Compositions selon l'une des revendications 1 à 4 caractérisées en ce qu'elles comprennent en outre des bactéricides et/ou des enzymes.

6. Procédé de préparation des compositions selon l'une des revendications 1 à 5 caractérisé en ce qu'il consiste à former une émulsion Huile dans eau par introduction d'eau dans l'huile contenant le(s) tensio-actif(s), puis à ajouter lentement le biopolymère en poudre sous agitation.

7. Procédé de préparation des compositions selon l'une des revendications 1 à 5 caractérisé en ce qu'il consiste à mélanger le(s) tensio-actif(s) dans l'huile, à disperser la poudre de biopolymère au sein de l'huile puis à ajouter l'eau sous agitation.

8. Procédé de préparation des compositions selon l'une des revendications 1 à 5 caractérisé en ce que:
   a) on prépare une émulsion huile dans eau par addition d'une huile et d'au moins un agent tensio-actif à une solution aqueuse contenant 1 à environ 18% en poids de biopolymère dans un rapport Huile/Eau compris entre 1/100 et 2/1.
   b) on concentre l'émulsion selon tout moyen connu jusqu'à obtention d'une émulsion contenant 10 à 60% de biopolymère dans la phase aqueuse.

9. Procédé selon la revendication 8 caractérisé en ce que la solution aqueuse de biopolymère est un moût de fermentation contenant 15 à 180 g/litre de biopolymère en sec.

10. Procédé selon la revendication 9 caractérisé en ce que le moût de fermentation a été concentré par ultrafiltration.

11. Procédé selon la revendication 8 caractérisé en ce que l'émulsion est concentrée par ultrafiltration.

12. Procédé de préparation des compositions selon l'une des revendications 1 à 5 caractérisé en ce que:
   a) on prépare une émulsion huile-dans-eau par addition d'une huile et d'au moins un agent tensio-actif à un moût de fermentation contenant 15 à 30 g/litre de biopolymère dans un rapport huile/eau compris entre 1/100 et 2/1.
   b) on concentre l'émulsion par ultrafiltration jusqu'à obtention d'une émulsion contenant 10 à 60% de biopolymère dans la phase aqueuse.

13. Procédé selon l'une des revendications 8 à 12 caractérisé en ce que l'émulsion est concentrée par ultrafiltration puis par évaporation ou distillation.

14. Procédé selon l'une des revendications 9, 10 ou 12 caractérisé en ce que le moût de fermentation a été clarifié par filtration et/ou traitement enzymatique.

15. Emploi des compositions selon l'une des revendications 1 à 5 pour la préparation de solutions aqueuses diluées utilisables dans les applications requérant des fluides aqueux viscosifiés.

16. Emploi selon la revendication 15 dans l'industrie pétrolière, notamment pour la récupération assistée du pétrole.

**Patentansprüche**

1. Zusammensetzungen auf Basis von Biopolymeren enthaltend wenigstens 8% Biopolymer, dadurch gekennzeichnet, daß sie in Form einer stabilen Öl-in-Wasser-Emulsion vorliegen enthaltend an Gewichtsteilen:
   a) 40 bis 99 Teile einer wässrigen Phase enthaltend 10 bis 60 Gew.% Biopolymer und 40 bis 90% Wasser
   b) 1 bis 60 Teile Öl und
   c) 1 bis 40%, bezogen auf das Gemisch a)+b), wenigstens eines oberflächenaktiven Agens.

2. Zusammensetzungen in Form von Öl-in-Wasser-Emulsionen gemäß Anspruch 1, dadurch gekennzeichnet, daß sie 20 bis 30 Gew.Teile Biopolymer, 30 bis 50 Gewichtsteile Wasser, 25 bis 40 Gewichtsteile Öl und 4 bis 10 Gewichtsteile wenigstens eines oberflächenaktiven Agens enthalten.

3. Zusammensetzungen nach einem der Ansprüche 1 bis 2, dadurch gekennzeichnet, daß das Biopolymer Xanthangummi ist.

4. Zusammensetzungen gemäß einem der Ansprüche 1 bis 3, dadurch gekennzeichnet, daß das Öl ein aliphatischer Kohlenwasserstoff ist.

9

5. Zusammensetzungen nach einem der Ansprüche 1 bis 4, dadurch gekennzeichnet, daß sie außerdem Bakterizide und/oder Enzyme enthalten.

6. Verfahren zur Herstellung von Zusammensetzungen gemäß einem der Ansprüche 1 bis 5, dadurch gekennzeichnet, daß es darin besteht, eine Öl-in-Wasser-Emulsion durch Zugabe von Wasser in Öl zu bilden, das das oberflächenaktive Agens (die oberflächenaktiven Agenzien) enthält, und dann langsam das pulverförmige Biopolymer unter Rühren hinzuzugeben.

7. Verfahren zur Herstellung von Zusammensetzungen gemäß einem der Ansprüche 1 bis 5, dadurch gekennzeichnet, daß es darin besteht, das das oberflächeraktive Agens (die oberflächenaktiven Agenzien) mit Öl zu mischen, das Pulver des Biopolymers in diesem Öl zu dispergieren und dann das Wasser unter Rühren hinzuzugeben.

8. Verfahren zur Herstellung von Zusammensetzungen gemäß einem der Ansprüche 1 bis 5, dadurch gekennzeichnet, daß:

a) main eine Öl-in-Wasser-Emulsion durch Zugabe eines Öls und wenigstens eines oberflächeaktiven Agens zu einer wässrigen Lösung enthaltend 1 bis etwa 18 Gew.% des Biopolymeren in einem Verhältnis Öl-Wasser von zwischen 1:100 und 2:1 herstellt,

b) man die Emulsion auf irgendeine bekannte Weise konzentriert, bis man eine Emulsion enthaltend 10 bis 60% an Biopolymeren in der wässrigen Phase erhält.

9. Verfahren nach Anspruch 8, dadurch gekennzeichnet, daß die wässrige Lösung des Biopolymers eine Fermentations-Maische enthaltend 15 bis 180 g/l an trockenem Biopolymer ist.

10. Verfahren nach Anspruch 9, dadurch gekennzeichnet, daß die Fermentations-Maische durch Ultrafiltration konzentriert wurde.

11. Verfahren nach Anspruch 8, dadurch gekennzeichnet, daß die Emulsion durch Ultrafiltration konzentriert wird.

12. Verfahren zur Herstellung von Zusammensetzungen gemäß einem der Ansprüche 1 bis 5, dadurch gekennzeichnet:

a) daß man eine Öl-in-Wasser-Emulsion herstellt durch Zugabe eines Öls und wenigstens eines oberflächenaktiven Agens zu einer Fermentations-Maische enthaltend 15 bis 30 g/l Biopolymeren in einem Verhältnis Öl-Wässer von zwischen 1:100 und 2:1,

b) man die Emulsion durch Ultrafiltration konzentriert, bis man eine Emulsion enthaltend 10 bis 60% an Biopolymeren in der wässrigen Phase erhält.

13. Verfahren nach einem der Ansprüche 8 bis 12, dadurch gekennzeichnet, daß die Emulsion durch Ultrafiltration konzentriert wird und anschließend durch Verdampfung oder Destillation.

14. Verfahren nach einem der Ansprüche 9, 10 oder 12, dadurch gekennzeichnet, daß die Fermentations-Maische durch Filtration und/oder enzymatische Behandlung geklärt wurde.

15. Verwendung von Zusammensetzungen gemäß einem der Ansprüche 1 bis 5 für die Herstellung von verdünnten wässrigen Lösungen, die für Anwendungen verwendbar sind, die wässrige verdickte Flüssigkeiten erfordern.

16. Verwendung gemäß Anspruch 15 in der Erdöl-Industrie, insbesondere für die unterstützte Gewinnung von Erdöl.

**Claims**

1. Compositions based on biopolymers containing at least 8% of biopolymer, characterized in that they are in the form of a stable oil-in-water emulsion comprising by weight:

a) 40 to 99 parts of an aqueous phase containing by weight 10 to 60% of biopolymer and 40 to 90% of water,

b) 1 to 60 parts of oil, and

c) 1 to 40%, relative to the mixture a)+b), of at least one surfactant agent.

2. Compositions in the form of oil-in-water emulsions according to claim 1, characterized in that they comprise by weight 20 to 30 parts of biopolymer, 30 to 50 parts of water, 25 to 40 parts of oil and 4 to 10 parts of at least one surfactant agent.

3. Compositions according to one of claims 1 to 2, characterized in that the biopolymer is xanthan gum.

4. Compositions according to one of claims 1 to 3, characterized in that the oil is an aliphatic hydrocarbon.

5. Compositions according to one of claims 1 to 4, characterized in that they comprise, in addition, bactericides and/or enzymes.

6. Process for preparing the compositions according to one of claims 1 to 5, characterized in that it consists in forming an oil-in-water emulsion by the introduction of water into the oil containing the surfactant(s), and then in slowly adding the powdered biopolymer with stirring.

7. Process for preparing the compositions according to one of claims 1 to 5, characterized in that it consists in mixing the surfactant(s) in the oil, in dispersing the biopolymer powder in the oil and then in adding water with stirring.

8. Process for preparing the compositions according to one of claims 1 to 5, characterized in that:

a) an oil-in-water emulsion is prepared by adding an oil and at least one surfactant agent to an aqueous solution containing 1 to approximately 18% by weight of biopolymer in an oil/water ratio of between 1:100 and 2:1.

b) the emulsion is concentrated according to any known means until an emulsion containing 10 to 60% of biopolymer in the aqueous phase is obtained.

9. Process according to claim 8, characterized in that the aqueous solution of biopolymer is a fermentation must containing 15 to 180 g/litre of biopolymer in the dry state.

10. Process according to claim 9, characterized in that the fermentation must has been concentrated by ultrafiltration.

11. Process according to claim 8, characterized in that the emulsion is concentrated by ultrafiltration.

12. Process for preparing the compositions according to one of claims 1 to 5, characterized in that:

a) an oil-in-water emulsion is prepared by adding an oil and at least one surfactant agent to a fermentation must containing 15 to 30 g/litre of biopolymer in an oil/water ratio of between 1:100 and 2:1.

b) the emulsion is concentrated by ultrafiltration until an emulsion containing 10 to 60% of biopolymer in the aqueous phase is obtained.

13. Process according to one of claims 8 to 12, characterized in that the emulsion is concentrated by ultrafiltration and then by evaporation or distillation.

14. Process according to one of claims 9, 10 or 12, characterized in that the fermentation must has been clarified by filtration and/or enzymatic treatment.

15. Use of the compositions according to one of claims 1 to 5 for the preparation of dilute aqueous solutions that are usable in applications requiring aqueous fluids having increased viscosity.

16. Use according to claim 15 in the petroleum industry, in particular for enhanced oil recovery.